# EUROPEAN PATENT APPLICATION

(11) **EP 0 577 406 A1**
(43) Date of publication of application: **05.01.1994**
(21) Application number: 93305109.6
(22) Date of filing: 30.06.1993
(51) Int. Cl.: C08G 73/02, H01B 1/12

(54) **Conjugated polymers**

(30) Priority: 01.07.1992 GB 9213974
(71) Applicant: THE DOW CHEMICAL COMPANY, Midland, Michigan 48640 (US)
(72) Inventor: Eiffler, Jurgen, D-2160 Stade (DE); Schneider, Hans Peter, D-2160 Stade (DE); Adams, Philip Norman, Old Cassop, Durham DH5 4QA (GB); Bloor, David, Durham DH1 3TZ (GB); Monkman, Andrew Paul, Stanhope, Co. Durham DH13 2UE (GB)
(74) Representative: Raynor, John

(57) **Abstract**

A cross-linked conjugated polymer contains carbon-nitrogen linkages wherein nitrogen atoms are covalently bound to a cross-linking group and on the average one cross-linking group is bound to more than one nitrogen atom.

## Description

### Background of the Invention

The present invention relates to conjugated polymers, a process for preparing them and their use for producing shaped articles, such as films.

Conjugated polymers, as generally defined in the art, are organic polymers that contain conjugated binding systems, such as double bonds, aromatic or heteroaromatic rings or triple bonds. Conjugated polymers often have a pi electron network which allows electron transfer substantially throughout its molecular structure. These polymers can exist in different forms. The different forms can be produced from one another by (electro)chemical reaction, such as oxidation, reduction, acid/base reactions, complexation reactions etc. Such reactions are known as "doping" reactions in the state of the art. As least one of the possible forms or states is electrically conductive. Accordingly, these polymers are usually classified as "intrinsically conductive polymers".

Well known examples of conjugated polymers are polyaniline (PANI) in its various oxidation states as well as derivatives thereof, for example polymerization products of a substituted aniline, copolymers thereof and physical blends of such polymers. Polyaniline in its neutral, base form is believed to comprise subunits having the formula I 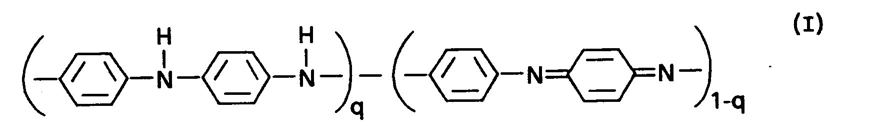
wherein q is between 0 and 1. The oxidation state of polyaniline referred to as "emeraldine" is believed to have a value of q of about 0.5. The oxidation state of polyaniline referred to as "leuco-emeraldine" or"white-emeraldine" is believed to have a value of q of about 1. The oxidation state of polyaniline referred to as pernigraniline is believed to have a value of about 0.

The base form of polyaniline is electrically non-conductive. M.R. Anderson et al., Department of Chemistry and Biochemistry, University of California, Los Angeles, have reported at the International Conference on Science and Technology of Synthetic Metals at Tuebingen, Germany (1990) that films produced from the base form as well as from the protonated form of polyaniline in the emeraldine oxidation state are useful as gas separation membranes.

It is further well known that the base form can be doped with an acid to produce electrically conductive polyaniline which is useful in many applications, for example batteries, photovoltaics etc.

Much research effort has been and is still being spent on the development of polyaniline in its doped and undoped forms. There are two main areas of research: one research area aims at increasing the electrical conductivity of doped polyaniline; the other main research area aims at improving the processability of shaped articles made from polyaniline, such as films or fibers.

Some of the research is summarized by J.L. Bredas and R.R. Chance (eds.), "Conjugated Polymeric Materials: Opportunities in Electronics, Optoelectronics and Molecular Electronics", NATO ASI Series, Series E: Applied Sciences, Vol. 182, pages 53-63 and by M. Angelopoulos et al. in Mol. Cryst. Liq. Cryst., 1988, Vol. 160, pp. 151-163. The oxidation states of polyaniline, the synthesis of polyaniline at various oxidation states and the production of polyaniline solutions and films are discussed therein. The emeraldine oxidation state of polyaniline can produced in aqueous acid media by oxidative polymerization of aniline in the presence of an oxidizing agent, such as a persulfate. A partly protonated emeraldine, e.g. an emeraldine hydrochloride, is produced which can be transformed to Emeraldine base by treatment with diluted aqueous ammonium hydroxide. Emeraldine base is soluble in N-methyl pyrrolidone (NMP) and in concentrated sulfuric acid. It may be cast as free-standing, flexible film from its NMP solutions. This film can be doped with aqueous HCl to give the corresponding flexible electrically conductive film of emeraldine hydrochloride. The emeraldine base film which contains a plastizer such as NMP can be oriented by simultaneous heat treatment and stretching of the film. Oriented fibers are discussed as well.

U.S. patents 4,798,685; 4,806,271; and 4,851,487 all relate to the production of base-type conductive polymers, particularly from the family of conductive polyaniline. In these patents it is disclosed that the non-conductive emeraldine base can be doped with Lewis acids, such as alkylating agents, for producing a conductive polymer salt. It is disclosed that the use of proper Lewis acids results in conductive polyanilines with the Lewis acid as a side chain. These derivatized polyanilines are said to be more stable and processable than other prior art emeraldine acid salts.

According to U.S. patent 4,798,685 non-conductive polyaniline is reacted with R⁺X⁻ or R₃O⁺X⁻ where R⁺ is an organic cation, such as an alkyl group having from 1 to 20 carbon atoms, e.g. methyl or ethyl, or aryl and X⁻ is a stable anion, such as I⁻. U.S. patent 4,806,271 suggests the reaction of non-conductive polyaniline with a R₂SO₄, R'SO₂Cl or R₃''SiCl wherein R, R' and R'' are each an alkyl group having from 1 to 20 carbon atoms, e.g. methyl or ethyl, or aryl. The group R, SO₂R' or SiR₃'' forms a covalent bond with nitrogen. U.S. patent 4,851,487 suggests the reaction of non-conductive polyaniline with an anhydride, such as R-SO₂-O-SO₂R', R-CO-O-CO-R' or R-CO-O-SO₂R' wherein R and R' are each an alkyl group having from 1 to 20 carbon atoms, e.g. methyl or ethyl, or aryl. The group -SO₂R or -COR forms a covalent bond with nitrogen. The counterions of the produced polymer salts are the chemically and thermally stable -SO₃R' and -O₂CR' anions. Dianhydrides can be used as well, such as benzophenone tetracarboxylic dianhydride. U.S. patents 4,798,685; 4,806,271 and 4,851,487 state that highly conductive polymers are produced by the disclosed methods and that the physical properties of the polymer can be varied. These U.S. patents mention that one can vary the chain length of an alkyl group R to increase the solubility of the polymer which permits the casting of a film of the conductive polymer on a substrate and permits control of the mechanical properties, such as ductility of the polymer.

However, the assignee of the three above discussed U.S. patents discloses in W0 89/07632 that the conductive polymers of the three discussed U.S. patents tend to be brittle, resulting in inferior mechanical properties. In order to overcome these disadvantages, WO 89/07632 suggests to blend these relatively brittle conducting polymers with a flexible polymer, such as polyimide. According to WO 89/07632 first a non-conductive polyaniline is reacted with a dianhydride containing a polyimide-like group, such as benzophenone tetracarboxylic dianhydride, as disclosed in U.S. patent 4,851,487. In this reaction one of the anhydride groups reacts with nitrogen in the polyaniline whereas the other anhydride group remains unreacted. The resulting conductive polymer is then blended with a polyimide in a solvent to form a continuous phase blend. It is said that the blend has a good thermostability and that flexible films can be cast from the solution of the polymer blend. Unfortunately, the conductivity of the produced films is decreased due to the presence of the polyimide. According to the examples the films only have an electrical conductivity of 0.05 S/cm which is insufficient for many applications.

WO 90/01775 suggests to produce highly thermally stable electrically conductive polyaniline by reacting base-type non-conductive polyaniline with an aromatic multisulfonic acid. WO 90/01775 suggests that the produced electrically conductive polyaniline contains -SO₃H groups covalently linked to the nitrogen atoms of the conductive polymer through the H bond. However, it is well known that hydrogen can undergo only one covalent bond. It appears more likely that the reaction between the nitrogen and the -SO₃H group is a standard acid/base reaction wherein nitrogen is protonated and the -SO₃H groups are deprotonated and wherein ionic forces act between the groups instead of covalent bonds. This view is confirmed by the formulas in WO 90/01775 wherein ionic groups are shown. WO 90/01775 suggests that the aromatic multisulfonic acids can bind to two different polyaniline molecules as by cross-linkage. The molar proportions of the aromatic multisulfonic acid to nitrogen-containing polymer free-base can range from 1/16 to 2 moles of multisulfonic acid per nitrogen of each polymer unit. The resulting electrically conductive polymer is obtained in the form of a powder which has a conductivity ranging from 0.2 to 10 S/cm. Unfortunately, the achieved electrical conductivity is not high enough for some applications. Furthermore, only brittle films can be produced from this electrically conductive polymer. This finding is confirmed by the assignee of WO 90/10775 who discloses in W0 90/13601 that the conductive polymers disclosed in U.S. application Serial No. 226,484 (which is equivalent to WO 90/10775) tend to be brittle, resulting in inferior mechanical properties. In order to overcome these disadvantages, WO 90/13601 suggests to blend these relatively brittle conducting polymers with a polyamide, e.g. nylon, in a suitable solvent. It is said that flexible films can be formed from the solution of the polymer blend. Unfortunately, the conductivity of the produced films is decreased due to the presence of the polyamide. According to the examples the films only have an electrical conductivity of up to 0.5 S/cm which is insufficient for many applications.

WO 90/11317 suggests a process for producing a conductive polymer blend wherein a non-conductive polyaniline is first reacted with a cation-donor, such as carbonyl or sulfonyl anhydride to form an electrically conductive polymer, as described in U.S. patent 4,851,487. The conductive polymer is mixed with an aromatic maleimide, such as an aromatic bismaleimide. Preferably 50 to 99 wt.-% conductive polyaniline and 1 to 50 wt.-% maleimide component are blended in a solvent. The solution can be applied on a substrate, such as glass, the solvent is evaporated and the resulting film can be cured by heating at elevated temperature. According to the examples the films only have an electrical conductivity of up to 0.1 S/cm which is insufficient for many applications.

E.M. Scherr et al. have suggested in Preprints relating to the International Conference on Science and Technology of Synthetic Metals at Tuebingen, Germany (1990) that the mechanical properties of emeraldine base films can be improved by incorporating dibutyl phthalate plasticizer and those of the protonated films can be improved by using a "dopant-plasticizer", such as CF₃(CF₂)₆COOH. Unfortunately, these plasticizers, can migrate out of the polymer film whereby the benefit provided by these plasticizers is lost. This is particularly the case when the film is contacted with solvents.

US patent 5,095,076 discloses the preparation of conductive polymers, particularly polyanilines, by reacting a mixture of aniline, dianiline and a flexible diamine in the presence of an oxidant, such as ammonium persulfate, and a protonic acid. The mixture is polymerized and a conductive polyaniline is formed in which the conjugation is interruped by an intermediate diamine group. Exemplary of the flexible diamine are 1,3-bis(3-aminophenoxy) benzene or triethylene tetramine. It is said that the presence of a flexible diamine during the oxidative polymerization renders the resulting polymer more flexible than polyaniline per se and increases its solubility in water. The U.S. patent teaches that the produced polyaniline material has a substantially improved conductivity, however, conductivities of no more than 17 S/cm are disclosed in the examples.

Another approach to enhance the mechanical properties of polyaniline films is to blend conductive polyaniline with rigid chain polymers having a high tensile strength, such as poly(p-phenylene terephthalamide) (PPTA), commercially available under the trademark Kevlar from DuPont. A. Andreatta et al., Mol. Cryst. Liq. Cryst., 1990, Vol. 189, pp. 169-182 suggest to dissolve polyaniline and PPTA in concentrated sulfuric acid and to spin fibers therefrom. Fibers of good mechanical properties are obtained, however the maximal conductivity of the fibers is 10 S/cm. Depending on the volumer fraction of PPTA in the fiber, the achieved conductivity is even substantially lower, as shown on p. 174 of the cited reference. It is also known that polyaniline degrades in concentrated sulfuric acid.

Published European patent application EP-A-0 314 311 suggests a method for producing conducting articles, such as fibers, films, tapes, etc.. A gel of a carrier polymer in a compatible solvent is formed, a monomer is polymerized within the gel to form a conjugated polymer upon polymerization and the produced article is doped. Flexible chain polymers, such as polyethylene, isostatic polypropylene, poly(ethylene oxide) or polystyrene but also rigid rod polymers, such as aramid polymers, aromatic polyesters, etc. are suggested as a carrier polymer. EP-A-0 314 311 states that the conducting articles have a conductivity of at least about 300 S/cm. However, according to the Examples such high values are only achieved when acetylene is polymerized. When producing PPTA/polyaniline fibers using sulfuric acid as the compatible solvent, the achieved electrical conductivity is only 0.3 S/cm, as evidenced by Example 5.

S. Preto-Clement et al., International SAMPE Electronics Conference, June 12-14, 1990, "Oxidative Polymerization of Aniline: Characterization of New Polyaniline Products", suggest a way of producing low molecular weight conductive polyaniline. They mention that the polyaniline can be mixed easily with epoxies, polyurethanes or polyimides to make conductive blends. They indicate that polyaniline could participate in curing of the mentioned resins. However, they also warn that many of the mentioned resins must be cured at elevated temperature. After various samples of electrically conductive polanilines have been heated to 180°C between 1.5 and 4 hours, electrical conductivities of only 0.04 S/cm have been measured, which is only 4.3% of their conductivities prior to heat-treatment.

In view of the deficiencies of the polymers and films disclosed in the prior art, mainly either insufficient mechanical properties or insufficient electrical conductivities, it is an object of the present invention to provide new conjugated polymers which contain carbon-nitrogen linkages, such as polyaniline. Particularly, it is an object of the present invention to provide new polymers from which shaped articles, such as films, can be produced which have an improved tensile property, such as improved flexibility. It is a further object of the present invention to produce new polymers from which shaped articles, such as films, can be produced which have an improved tensile property as well as a high electrical conductivity.

### Summary of the Invention

One aspect of the present invention is a cross-linked conjugated polymer containing carbon-nitrogen linkages wherein nitrogen atoms are covalently bound to a cross-linking group and on the average one crosslinking group is bound to more than one nitrogen atom.

Another aspect of the present invention is a process for producing the cross-linked conjugated polymer of the present invention wherein a conjugated polymer containing carbon-nitrogen linkages is reacted with a cross-linking agent containing at least two functional groups and being capable of covalently binding to the nitrogen of said polymer.

Yet another aspect of the present invention is a shaped article, such as a film or fibers, made from the cross-linked conjugated polymer of the present invention.

Yet another aspect of the present invention is a process for making a film or fibers from the cross-linked polymer of the present invention wherein in the film or the fibers are formed from a solution or dispersion of the cross-linked polymer in an organic diluent.

It has been found that the cross-linked conjugated polymers of the present invention are useful for preparing films or fibers which have improved mechanical properties. The films and fibers can be oriented and, after orientation, show a substantial improvement in mechanical properties, such as elongation or tensile strength at break, as compared with corresponding known conjugated polymers which have not been cross-linked. After doping, cross-linked conjugated polymers, films or fibers of high electrical conductivity can be obtained.

### Detailed Description of the Invention

The cross-linked conjugated polymer of the present invention is produced by reacting a conjugated polymer that contains carbon-nitrogen linkages with a cross-linking agent described below. The conjugated polymer is generally employed in its base, non-conductive form. The term "conjugated polymers" as used herein relates to organic polymers that contain conjugated binding systems, such as double bonds, aromatic or heteroaromatic rings or triple bonds. It is not necessary that the conjugation extends essentially throughout the backbone of the polymer. The conjugation may be interrupted, for example as described in U.S. patent 5,095,076. Useful conjugated polymers containing carbon-nitrogen linkages are for example polybenzimidazoles homo- or copolymers of aniline and/or substituted aniline or copolymers of aniline and/or substituted aniline with heteroaromatic compounds having five our six members in the aromatic ring. Preferred aniline copolymers are produced from substituted or, preferably, unsubstituted aniline and up to 25 percent pyrrole, based on the total polymer weight. Other preferred aniline copolymers contain unsubstituted aniline and up to 50 percent, preferably up to 25 percent of a substituted aniline, based on the total polymer weight. Substituted anilines are preferably substituted in the meta- or ortho-position. Conjugated polymers containing carbon-nitrogen linkages preferably are polyaniline, naphthyl or biphenyl derivatives thereof, alkyl, alkoxyl or aryl substituted polyanilines or their alkyl, alkoxyl or aryl substituted naphthyl or biphenyl derivatives.

Preferred conjugated polymers are represented by formula II 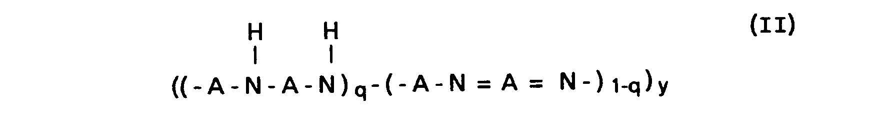
wherein A is an unsaturated carbon-containing group, such as aryl, particularly the benzene ring (as in polyaniline), naphthyl or biphenyl, or a substituted benzene, naphthyl or biphenyl group, wherein the substituent for example is alkyl, alkoxy or aryl, e.g., 2-methyl-biphenyl, butyl naphthalene, 2-methyl aniline, 3-methyl-aniline, 2-methoxy-aniline, 3-methoxy-aniline, beta-phenyl naphthalene or beta tolyl naphthalene; q is between 0 and up to 1, preferably from 0.5 to 1 and y is an integer ranging from 1 to about 1000, preferably from about 10 to about 100. When y is in the low end of the above range, e.g. when y is 1 or 2, the materials are known as oligomers and are intended to be included within the term "polymer" employed herein. In order to enable the cross-linking reaction described below, the conjugated polymers of formula II should contain -NH- groups, i.e. q should not be 0.

When A is a benzene, naphthyl or biphenyl group which is substituted by alkyl or alkoxyl, the alkyl or alkoxyl group preferably has from 1 to 12, more preferably from 1 to 6 carbon atoms, such as methyl, ethyl, n-propyl, isopropyl, n-butyl, sec.-butyl or tert.-butyl, the pentyl or hexyl groups, such as n-hexyl, methoxyl, ethoxyl, n-propoxyl, isopropoxyl, n-butoxyl, sec.-butoxyl or tert.-butoxyl. Phenyl and tolyl are the preferred aryl substituents. Exemplary of conjugated polymers of formula II are polytoluidine or poly-o-(ethoxy)aniline.

In formula II above q is preferably 0.5, i.e. the preferred conjugated polymers are represented by formula III.

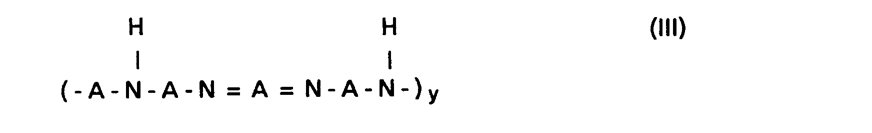

Other preferred polymers are those polymers of formula II wherein q is more than 0.5, preferably from 0.7 to 1, more preferably from 0.9 to 1. Such polymers can be produced in a known manner, for example by treating a polymer of formula III with a known reducing agent, such as hydrazine.

Useful aniline copolymers are for example also those which have been produced by copolymerization of heteroaromatic or aromatic di-, tri- or tetrafunctional amines, such as the diaminobenzenes, 1,2,3,4-tetraaminobenzene, 1,2,4,5-tetraaminobenzene or 3,3',4,4'-tetraamino-biphenyl or the corresponding naphthaline derivatives. These comonomers are preferably reacted with aniline in a molar ratio of from 0.001 : 1 to 0.1 : 1, more preferably from 0.01 : 1 to 0.1 : 1. By the copolymerization of these monomers, the produced polyaniline chains contain additional primary amino groups which are very useful in the subsequent reaction with a cross-linking agent described further below. Primary amino groups react faster with the cross-linking agent than the secondary amino groups in the polymer chain. The preparation of such a copolymer is illustrated further below by an example.

Preferred aniline copolymers which are useful as starting materials for the cross-linking reaction described below can be represented by the following general formula: 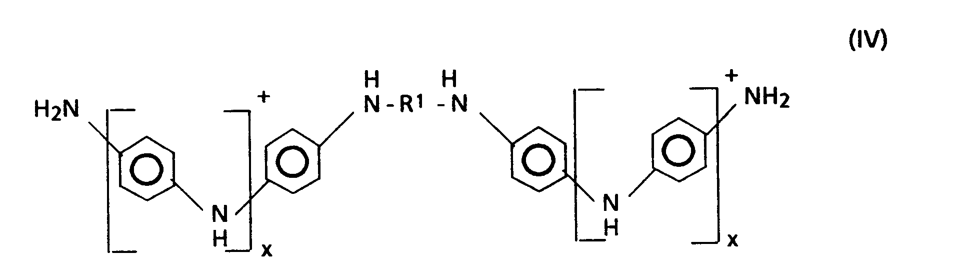
where R¹ is any organic group or unit in the form of a flexible segment derived from an organic diamine, and that is more flexible than polyaniline itself and that interrupts the conjugation of the adjacent polyaniline groups, and renders the resulting polymer more flexible than polyaniline itself. Thus, R¹ can be an aromatic group or an aliphatic group, and which can be unsubstituted or substituted, e.g. with amino groups, oxygen-containing groups, halogen groups, e.g. Cl, Br and the like, or aryl, e.g. phenyl, or alkyl substituents containing from 1 to about 20 carbon atoms, e.g. methyl, ethyl, and the like; and x ranges from about 8 to about 200.

The R¹ group is derived from aromatic and aliphatic diamines and representative examples of R¹ include bis(-phenoxy)benzene, methylene diphenyl, dodecane, ethyleneimine and oxydiphenyl.

The conductive polymers of formula IV can be prepared by providing a mixture of aniline, dianiline and a flexible diamine of the formula

H₂N - R¹ - NH₂

where R¹ has the values noted above. Preferably, R¹ is a relatively large aromatic or aliphatic group containing at least 4 carbon atoms, e.g. about 4 to about 20 carbon atoms. Examples of flexible diamine additives include 1,3-bis(3-aminophenoxy) benzene, methylene dianiline, oxydianiline, 2,2'-bis[(4-aminophenoxy)-4 phenyl] hexafluoro propane, 1,12 diamino dodecane, and ethyleneimines such as diethylene triamine and triethylene tetramine. A preferred diamine is triethylene tetramine. The copolymers of formula IV and methods of producing them are described in more detail in U.S. patent 5,095,076.

A preferred conjugated polymer containing carbon-nitrogen linkages is unsubstituted polyaniline in the form of the emeraldine base. Polyaniline having a low molecular weight, such as an oligomer of polyaniline containing about 8 aniline units is useful, however, higher molecular weight polyaniline is preferred in order to optimize the tensile elongation at break of films produced from the polymer. It is well known that the molecular weight of the polymer can be influenced by the polymerization conditions and by the choice of the solvent which is utilized for washing the deprotonated polyaniline. The polyaniline preferably has a molecular weight of about 10,000 to about 150,000, more preferably of about 50,000 to about 80,000.

Polyaniline in the form of the emeraldine base can be obtained in a known manner, for example by known oxidative polymerization of aniline in an aqueous acidic medium in the presence of an oxidizing agent, followed by deprotonation of the produced partially protonated polyaniline. The partially protonated polyaniline preferably is polyaniline hydrochloride, however polyaniline which has partially been protonated with other acids during the polymerization, for example with HBF₄, HClO₄, sulfuric acid or an organic acid, such as p-toluene sulfonic acid, can also be used in the deprotonation step. The deprotonation can for example be achieved by treatment with a base, such as aqueous ammonia or aqueous sodium or potassium hydroxide for a sufficient period, for example during 0.1 to 30 hours at ambient or elevated temperature. The base form of polyaniline is subsequently washed, preferably with water which is optionally mixed with a water-miscible solvent, such as methanol or isopropanol. Preferably, undiluted water is used for washing. The production of polyaniline in the form of the emeraldine base is for example described by J.L. Bredas and R.R. Chance (eds.), "Conjugated Polymeric Materials: Opportunities in Electronics, Optoelectronics and Molecular Electronics", NATO ASI Series, Series E: Applied Sciences, Vol. 182, pages 56 and 57.

Polyaniline in the form of the leuco-emeraldine can be produced by treating the emeraldine base with a reducing agent, such as hydrazine.

A polymer of optionally substituted aniline which has been coated with polyvinylalcohol as disclosed in WO 90/02763 or with a cationic polymer as disclosed in EP-A-0,391,534 and which is deprotonated is also useful as a starting material for preparing a cross-linked conjugated polymer of the present invention.

The following description refers to polyaniline in the form of the emeraldine free base (hereafter "deprotonated polyaniline" or "polyaniline") although the conjugated polymers containing carbon-nitrogen linkages are not limited thereto.

Deprotonated polyaniline, i.e. polyaniline in the form of the emeraldine base, is dissolved or dispersed in an organic diluent, such as a suitable organic solvent, preferably N-methyl-2-pyrrolidone, dimethylformamide, tetramethylurea, N,N-dimethylimidazolidone, dimethylsulfoxide, N,N-dimethylacetamide or any other organic solvent in which deprotonated polyaniline is soluble or dispersible. Mixtures of two or more organic solvents or mixtures of a water-miscible organic solvent with water are also useful as an organic diluent and included in the term "organic diluent". Preferred mixtures are mixtures of N-methyl-2-pyrrolidone with water, methanol, pyrrolidone, tetrahydrofurane or dimethylformamide. It is essential that the organic solvent is inert, i.e. that it does neither react with the polyaniline nor with the cross-linking agent that is used to cross-link the deprotonated polyaniline. Preferably from 0.1 to 25%, more preferably from 1 to 20% and most preferably from 2 to 15% polyaniline is dissolved or dispersed, based on the total weight of polyaniline and the organic diluent. The polyaniline is generally utilized in the form of a powder. The polyaniline is preferably dispersed or dissolved in the organic diluent with the aid of an ultrasonic bath. Alternatively, the organic diluent may be heated prior to, during or after addition of the polyaniline, for example to a temperature of up to about 80°C, preferably up to about 65°C.

The dispersed or dissolved deprotonated polyaniline is reacted with a cross-linking agent which contains at least two functional groups and which is capable of covalently binding to the nitrogen of the deprotonated polyaniline. Thereby a cross-linked polyaniline is produced wherein nitrogen atoms are covalently bound to cross-linking groups and on the average one cross-linking group is bound to more than one nitrogen atom. In the cross-linking reaction two or more nitrogen atoms react with one molecule of the cross-linking agent whereby covalent bonds are formed between the nitrogen atoms and the cross-linking group. It is to be understood that usually not 100% of the functional groups react with nitrogen, however, on the average one cross-linking group is bound to more than one nitrogen atom. Preferably, on the average one cross-linking group is bound to at least 1.5, more preferably to at least 1.8 and most preferably to about two or more nitrogen atoms. Without wanting to be bound by the theory, it is believed that the cross-linking agent reacts with primary amine groups at the ends of the polymer chains as well as with secondary amine groups and, if present, with primary amine groups which are located between the two ends of each main polymer chain.

Useful cross-linking agents may contain two, three, four or more functional groups that can react with the nitrogen of the polyaniline to form a covalent bond between nitrogen and the cross-linking agent. Such groups are well known in the art. Usually two functional groups are sufficient. For the present invention it is essential that covalent bonds are formed. Partial ionic cross-linking by means of an aromatic multisulfonic group for increasing the thermal stability of polyaniline is disclosed in WO90/01775, however, as discussed above, films produced according to the teaching of WO90/01775 are brittle.

The crosslinking agent contains two or more functional groups and a cross-linking group that is bound to the functional groups.

Preferred functional groups are halogen, such as chlorine or bromine, isocyanate, -C(O)-Cl, -O-C(O)-Cl, or glycidyloxy groups.

The cross-linking group as herein defined is the group that is incorporated into the conjugated polymer, such as polyaniline, after the cross-linking reaction. A portion of the functional groups may be incorporated into the conjugated polymer after the cross-linking reaction as well, depending on the particular functional group. It is well known in the art how nitrogen and the functional group react with each other and whether a portion of the functional group is incorporated into the cross-linked polymer.

The cross-linking group is preferably aliphatic. The cross-linking group preferably contains "spacer segments", for example long chain alkylene or bivalent alkene, alkoxy or siloxane groups. Without wanting to be bound to the theory, it is believed that the spacer segments render the cross-linked polyaniline flexible. It is believed that they allow the crosslinked macromolecules still to be flexible enough to be oriented.

Preferred cross-linking groups contain a radical of formula V 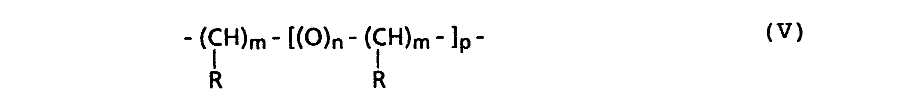
wherein R in each occurrence independently is H, CH₃ or OCH₃,
n in each occurrence independently is 0 or 1,
m in each occurrence independently is from 1 to 20,
p is from 0 to 10 and
the total of all -CH-R groups is from 2 to 50.

Preferably, m is from 2 to 16, more preferably from 4 to 12. Preferably, p is from 1 to 10, more preferably from 2 to 6. The total of all -CH-R groups preferably is from 4 to 32, more preferably from 4 to 16.

Preferred examples of radicals of formula V are those wherein
n an p are 0, R is H or methyl, preferably H, and m is from 2 to 20, preferably from 3 to 16; or wherein n is 1, R is H or methyl, preferably H, p is from 1 to 10, preferably from 2 to 6 and m is from 1 to 16, preferably 1 or 2, more preferably 2.

Preferred cross-linking agents are those of formula (VI) 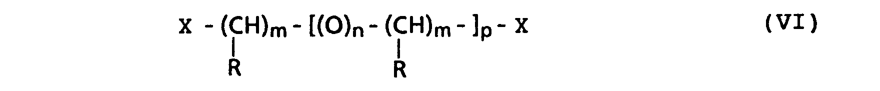
wherein R, m, n and p have the above mentioned meanings, and
X is halogen, such as chlorine or bromine, -N=C=O, -O-C(O)-Cl, -C(O)-Cl or glycidyloxy.

A preferred example of a cross-linking agent is a compound of formula VI wherein n and p are 0, m is 6, R is hydrogen and X is glycidyloxy or -N=C=O, i.e. 1,6-hexanediol diglycidylether or 1,6-diisocyanatohexane.

Other preferred cross-linking agents are dihaloalkanes, i.e. those of formula (VI) wherein R is hydrogen, n and p are 0, X in each occurrence is halogen, and m is from 1 to 20. Preferred examples thereof are 1,10-dibromodecane, 1,7-dibromoheptane or 1,6-dibromohexane.

Other preferred cross-linking agents are those of formula (VI) wherein R is hydrogen, X in each occurrence is -C(O)-Cl, n and p are 0, and m has the above-indicated meaning. Preferred examples thereof are malonic acid dichloride, succinic acid dichloride, glutaric acid dichloride or, more preferably, adipoyldichloride or sebacoyldichloride.

Another preferred cross-linking agent is Cl-C(O)-O-C₂H₄-(O-C₂H₄)₂-O-C(O)-Cl, i.e. triethyleneglycol-bis-(chloroformate).

Other useful cross-linking agents which are not covered by formula (VI) above are carboxy-terminated nitrile rubbers and carboxy terminated butadiene rubbers, if the carboxy groups are converted into the corresponding acid chloride groups, such as those disclosed in CA Selects: Epoxy resins, Issue 8, 1991, page 4, Abstract 114: 123663y, Abstract 114:123666b and Abstract 114: 123772h and the references cited therein, the chloroalkyl siloxanes disclosed in CA Selects: Plastics Manufacture & Processing, Issue 8, 1991, page 14, Abstract 114: 144850x and the reference cited therein as well as other siloxane oligomers having at least two functional groups X indicated above, such as epoxy-terminated bi- or tri-functional siloxanes. Liquid rubbers are preferred which have a molecular weight of up to about 250, such as butadieneacrylonitrile copolymers, which are terminated with C(O)-Cl groups or another functional group X listed above.

Preferred chloroalkyl siloxanes are compounds of formula R¹₃Si(OSiR²₂)ᵣCH₂CH(CH₂Cl)₂ wherein R¹ is alkyl, R² is alkyl, alkenyl or aryl and r is from 1 to 250, preferably from 1 to 100. The alkyl groups preferably have from 1 to 12, more preferably from 1 to 6 carbon atoms, such as methyl, ethyl, n-propyl, isopropyl, n-butyl, sec.-butyl or tert.-butyl, the pentyl or hexyl groups. The alkenyl group preferably has 2 to 12, more preferably 2 to 6 carbon atoms, such as ethenyl, the propenyl, butenyl, pentenyl or hexenyl groups.

Other preferred siloxanes are polyalkylene siloxanes having from 1 to 50, preferably from 2 to 20 repeating units of CH₂-CH-SiR³R⁴R⁵, wherein R³, R⁴ and R⁵ each independently are a C₁₋₁₀ hydrocarbyl group.

A preferred three-functional cross-linking agent is 1,1,1-trimethylolpropane triglycidylether.

A mixture of various cross-linking agents is also useful in the production of the cross-linked polymers of the present invention.

Generally the cross-linked conjugated polymer of the present invention is only slightly cross-linked. Advantageously, the weight of the cross-linking group is only up to 10% by the total polymer weight. The weight of the cross-linking group preferably is from 0.1 to 10%, more preferably from 0.2 to 5%, most preferably from 0.25 to 2.5%, by the total weight of the polymer.

In the reaction between the cross-linking agent and the conjugated polymer, such as polyaniline, the amount of utilized cross-linking agent is advantageously up to 10%, preferably from 0.1 to 10%, more preferably from 0.2 to 5% and most preferably from 0.25 to 2.5%, by the total weight of cross-linking agent and polyaniline. Usually, these low amounts of cross-linking agents do not render the polyaniline conductive to a substantial degree.

For reacting the dispersed or dissolved deprotonated polyaniline with an above described cross-linking agent, the cross-linking agent may be added simultaneously or after the polyaniline to the organic diluent. The cross-linking reaction may be conducted at decreased, ambient or increased temperature. The preferred reaction temperature depends on various factors, such as the reactivity of the functional groups of the cross-linking agent. For example, -O-C(O)-Cl, -C(O)-Cl, halogen or isocyanate groups generally react with deprotonated polyaniline at about ambient or lower temperature, whereas glycidyloxy groups generally only react at increased temperature, such as from about 50 to 80°C. The cross-linking reaction is preferably carried out at a temperature of from 10 to 80°C, more preferably from 15 to 80°C, most preferably from 25 to 80°C temperature. A mixture of polyaniline and a cross-linking agent in an above-mentioned diluent is usually stirred until the cross-linking reaction is completed. At ambient temperature, the reaction is usually completed in less than 25 hours, typically it takes from about 2 to about 20 hours. At increased temperature the reaction is generally completed within a few minutes. In many cases the mixture becomes viscous or gelation is observed when the reaction is completed. If the reaction is carried out at about ambient temperature or less and gelation is observed, preferably stirring of the mixture is continued until a fine dispersion of the cross-linked polymer particles in the organic diluent is obtained.

The cross-linked polymer can be recovered from the dispersion or solution in various shapes. The polymer can be utilized in its non-conducting form, for example in or as a gas and/or liquid separation membrane. Alternatively, the produced cross-linked conjugated polymer may be converted to a conductive form by doping. Doping methods are well known in the art. A preferred method is described further below.

A film or fibers can be produced from the solution or dispersion of the cross-linked polymer in the organic diluent in a known manner. General methods of spinning polymer fibers from their solutions or dispersions are well known in the art and for example described in A. Andreatta et al., Mol. Cryst. Liq. Cryst., 1990, Vol. 189, pp. 169-182.

For preparing a film, the solution or dispersion of the cross-linked polymer is preferably applied to a substrate, such as glass, metal, a suitable plastic material, etc.. The organic diluent can be evaporated in a known manner, for example at decreased pressure and/or increased temperature. Preferably, the temperature is not more that 80°C. Upon evaporation of the diluent, a film on the substrate is obtained.

According to a preferred method of conducting the cross-linking reaction and the preparation of a film, the deprotonated polyaniline and the cross-linking agent are dispersed or dissolved in an organic diluent and heated to about 80°C. After the solution or dispersion has been applied to a substrate, the diluent is evaporated. Upon evaporation the cross-linking reaction occurs simultaneously or nearly simultaneously with the formation of the film. This method is advantageous because dispersion of gelled particles in the organic diluent can be avoided.

The film preferably has a weight of 0.001 to 2 g/cm², more preferably from 0.01 to 0.5 g/cm². The thickness of the film preferably is from 1 to 100 micrometers, more preferably from 10 to 60 micrometers. The film can be removed from the substrate in a known manner.

The produced film or fibers can be utilized in its non-conducting form, for example as or in a gas separation membrane. Alternatively, the produced film or fibers can be oriented and optionally doped, preferably protonated, as described below. Hereafter the stretching and doping of a film is described although the invention is not limited thereto. The fibers can be treated accordingly.

The film of the present invention can be stretched to a very high extent and has a very high tensile strength at break. These mechanical properties are considerably improved, as compared to a film which has not been cross-linked according to the present invention. Generally, the film of the present invention can be stretched at least 10% more, usually at least 20% more and in most cases even at least 50% more than a corresponding non-cross-linked film. Improvements in the extent of stretching of up to 120% have been observed, as compared to the extent of stretching that is achieved with corresponding non-cross-linked films. Preferably, the film is uniaxially stretched or oriented at a temperature of up to 120°C, more preferably from 20 to 90°C, most preferably from 25 to 60°C. Orientation of non-cross-linked polyaniline films has been described by K.R. Cromack et al., "Thermal Process for Orientation of Polyaniline Films", Macromolecules 1991, 24, pages 4157-4161. The films of the present invention can be stretched accordingly. For example, the film can be clamped in a stretch ring and uniaxially oriented, preferably by applying a tension of from about 5 to 6N. After stretching the film preferably has a length of up to 250%, more preferably from 140 to 240%, most preferably from 170 to 220%, based on the length of the film prior to stretching. However, at a relatively high temperature, for example at more than 60°C, it is possible to stretch the film to such an extent that its length is more than 250%, based on its original length before stretching.

Generally, the film of the present invention has a tensile strength at break which is at least 20% higher, usually at least 30% higher and in most cases even at least 50% higher than the tensile strength at break of a corresponding non-cross-linked film. Up to 200% higher tensile strengths at break have been observed, as compared to the tensile strengths that have been observed with corresponding non-cross-linked films.

The stretched film can be doped in order to increase its conductivity and anisotropy. The doping can be carried out in known manner. Preferably, the film is protonated by contacting the film with an acid. Preferably, a strong inorganic acid, such as perchloric acid, phosphoric acid, sulfuric acid or, most preferably, hydrochloric acid is used. A strong organic acid, such as p-toluene sulphonic acid or, preferably, methane sulphonic acid is also useful. The film is generally contacted with an aqueous solution containing from 0.1 to 80 wt.-%, preferably from 1 to 50 wt.-%, more preferably from 5 to 20 wt.-% of an acid. The stretched film is generally contacted with the aqueous solution of the acid during 0.5 to 24 hours, preferably during 2 to 15 hours.

Instead of using an acid, the cross-linked films of the present invention may be doped with a mono-functional acid chloride, preferably with methane sulphonic acid chloride, or with monofunctional chloro- or bromoalkanes, such as 1-bromobutane, or with an anhydride, such as acetic acid anhydride. These doping agents are preferably dissolved in an organic solvent that does not dissolve the polyaniline film.

If the leuco-emeraldine form of polyaniline has been used for cross-linking, it is preferably doped in the presence of an oxidating agent, such as a peroxidisulfate salt, iron trichloride, a permanganate salt or a chromate salt.

In order to achieve a high degree of doping and a high electrical conductivity of the stretched and doped film, it is advantageous when the film has only been stretched only up to 250%, based on its length prior to stretching, at a temperature of up to 60°C. The electrical conductivity of the cross-linked, stretched and doped film of the present invention generally is at least 15% higher, usually at least 30% higher and in most cases even at least 50% higher than the electrical conductivity of the corresponding non-cross-linked films. Up to 80% higher conductivities of the cross-linked, stretched and doped films have been observed, as compared with the electrical conductivity of corresponding non-cross-linked films. The electrical conductivity of the stretched and doped films of the present invention generally is from 100 to 300 S/cm, typically from 150 to 300 S/cm and in most cases from 180 to 290 S/cm.

The conductivity of the mono-oriented or uniaxially stretched films is considerably higher in the direction parallel to the stretching direction than perpendicularly to the stretching direction. The ratio between the conductivity parallel to the stretching direction and the conductivity perpendicular to the stretching direction is designated as electrical anisotropy ratio. The electrical anisotropy ratio of a cross-linked, stretched and doped film of the present invention generally is least 10% higher, usually at least 20% higher and in most cases even at least 40% higher than the electrical anisotropy ratio of a corresponding non-cross-linked film. Up to 60% higher electrical anisotropy ratios of the cross-linked, stretched and doped films have been observed, as compared with the electrical anisotropy of corresponding non-cross-linked films. The electrical anisotropy ratio of the stretched and doped films of the present invention generally is from 2 to 10, typically from 4 to 8 and in most cases from 4 to 6 for polyaniline films which have been stretched at about 60°C applying a tension of 5N.

The cross-linked conjugated polymers of the present invention are useful in many applications, for example as an electrical conductor or semi-conductor, as an electrode material, in a solar cell, for the antistatic finishing of plastics or paper, as an electromagnetic shielding material, as an electrochemical membrane, in a heating film, for capacitive scanning in an electroplating process, in a rechargeable battery, or in fuel cells.

The present invention is further illustrated by the following examples which should not be construed to limit the scope of the present invention. Unless otherwise mentioned, all weights and percentages are by weight.

### Example 1:

0.3 parts of deprotonated polyaniline (PANI) was added to 2.7 parts of N-methyl-2-pyrrolidone (NMP) and stirred. Then the solution was placed in an ultrasonic bath in order to disperse the particles. 0.003 parts (1 wt.-% related to PANI) sebacoyl dichloride was added and the solution was allowed to stand for 18 hours to gel. Then the solution was placed in a homogenizer to disperse any lumps which formed as a result of cross-linking the polyaniline chains. The solution was then placed on glass slides to give a coating weight of 0.03 g/cm². The solvent was removed by placing the glass slides in a vacuum oven at 80°C under a vacuum of 1/20th of an atmosphere until the films were dry. The dry films were then cut into strips of about 3 cm x 2 cm for stretching. In the stretch rig the films were heated from room temperature to 60°C under a tension of 5N. The cross-linked emeraldine base (PANI) film showed a maximum elongation of 235%. After it had been doped with 2M aqueous HCl for 18 hours, it showed an electrical conductivity of 220 S/cm parallel to the stretch direction and an electrical anisotropy ratio of 5.6. A PANI film which was not cross-linked but which had been doped in the same manner showed a maximum elongation of 120%, an electrical conductivity of 148 S/cm parallel to the stretch direction and an anisotropy ratio of 3.6.

A cross-linked film which had been prepared as mentioned above but which was stretched to 200% had a tensile strength at break of 1420 kg/cm² whereas a PANI-film which had not been cross-linked could only be stretched to 110% elongation and had a tensile strength at break of 670 kg/cm².

### Example 2:

Example 1 was repeated, however 1 wt.-% (related to PANI) of adipoyldichloride instead of sebacoyl dichloride was used as a cross-linking agent. Within 2 hours a light gel had formed. The solution was poured onto a glass slide to give a coating weight of 0.03 g/cm² and a film was prepared as described in Example 1. The film was stretched as described in Example 1. The cross-linked PANI film could be stretched to 217%, as compared to only 118% for a PANI film which had not been cross-linked (84% improvement in extension of the cross-linked film). The stretched film was allowed to stand in 2M HCl for 18 hours. The conductivity was determined to be 225 S/cm parallel to the stretch direction and 44 S/cm perpendicular to the stretch direction, with an electrical anisotropy ratio of 5.2. A PANI film which was not cross-linked but doped in the same manner showed an electrical conductivity of 148 S/cm parallel to the stretch direction and 40 S/cm perpendicular to the stretch direction, with an electrical anisotropy ratio of 3.6 (a 50% improvement in electrical conductivity of the cross-linked film).

### Example 3:

Example 2 was repeated. The film containing the cross-linking groups could be stretched to 230% extension (65°C, 5.5N tension) versus 115% for a non-cross-linked film. The stretched was allowed to stand in a 7% (0.73 molar) aqueous solution of methane sulphonic acid for 18 hours. The conductivity was determined to be 286 S/cm parallel to the stretch direction and 46 S/cm perpendicular to the stretch direction, with an electrical anisotropy ratio of 6.3. The film thickness was 0.010 mm. Example 3 shows that even higher conductivities and higher electrical anisotropy can be achieved if the cross-linked films are doped with methane sulfonic acid instead of with HCl.

### Example 4:

Example 1 was repeated, however 10% PANI was dissolved in NMP and 1 wt.-% triethyleneglycol-bis(chloroformate) (related to PANI) was used as crosslinking agent and a film was prepared. The film could be stretched to 190% extension (as compared to 115% maximum extension for a non-cross-linked film). The stretched film was doped with 2M HCl for 18 hours. The conductivity was determined to be 181 S/cm parallel to the stretch direction and 42 S/cm perpendicular to the stretch direction, with an electrical anisotropy ratio of 4.3. Compared to a non-cross-linked film, this represents a 60% improvement in percent extension, a 20% improvement in conductivity parallel to the stretch direction and a 17% improvement in anisotropy ratio.

### Example 5:

Example 1 was repeated, however 10% PANI was dissolved in NMP and 1,6-diisocyanatohexane (1 wt.-% related to PANI) was used. A film was prepared and stretched as described in Example 1. The film could be stretched to 161% extension. The stretched film was doped as described in Example 1. Its conductivity was determined to be 180 S/cm parallel to the stretch direction and 54 S/cm perpendicular to the stretch direction. This represents an improvement of 36% in extension and an improvement of 21% in conductivity parallel to the stretch direction as compared with a non-cross-linked film.

An emeraldine base film which was cross-linked with 1.6-diisocyanatohexane as described above and stretched to 165% had a tensile strength at break of 1250 kg/cm² as compared with a non-cross-linked film having a tensile strength at break of only 670 kg/cm² at a maximum possible elongation of 120%.

### Example 6:

Example 1 was repeated, however, 1,10-dibromodecane was used as a cross-linking agent (1 wt.-% related to PANI). A film was prepared from the polyaniline gel solution as described in Example 1. The film was stretched at 60°C and 5N tension to 205% extension and had a tensile strength at break of 1360 kg/cm². A non-cross-linked film prepared under the same conditions could only be stretched to 120% elongation and had a tensile strength of 670 kg/cm². The stretched film was doped with 2M HCl for 18 hours at room temperature. The conductivity was 211 S/cm parallel to the stretch direction and 35.1 S/cm perpendicular to the stretch direction, with an electrical anisotropy ratio of 6. This represents a 75% improvement in percent elongation, 42% improvement in conductivity parallel to the stretch direction and 63% improvement in the anisotropy ratio.

Examples 1 - 6 illustrate that the cross-linked films of the present invention have better elastomeric properties and much higher tensile strength at break than corresponding non-cross-linked films. The doped films have higher conductivities parallel to the stretch direction and a higher electrical anisotropy ratio than corresponding non-cross-linked doped films.

### Example 7:

Example 1 was repeated, however 1,6-hexanediol diglycidylether was used as a cross-linking agent. Formation of a gel was not observed and the crosslinking took place when a film was cast from the solution of the polymer in the NMP and the solvent was removed in a vacuum oven at 80 °C under a vacuum of 1/20th of the atmosphere. The dry film was then stretched to 210% extension under the conditions described in Example 1. The tensile strength at break of the non-conductive deprotonated polyaniline film was determined to be 2430 kg/cm², which is an improvement of 360% as compared with a non-cross-linked film (670 kg/cm²). Doping with 2M HCl for 18 hours resulted in a film having a conductivity of 261 S/cm parallel to the stretch direction and 59 S/cm perpendicular to the stretch direction, with an anisotropy ratio of 4.5. The tensile strength at break of the doped cross-linked film was determined to be 1110 kg/cm², as compared with 580 kg/cm² for a non-cross-linked film.

### Example 8:

Example 1 was repeated, however 1,1,1-trimethylolpropane triglycidylether was used as a cross-linking agent. The cross-linking took place during the casting of the film and evaporation of the organic solvent when heated at 80°C under vacuum. The dry film could be stretched as described in Example 1 to 180% extension and had a tensile strength at break of about 2050 kg/cm². This is an improvement of about 300% as compared with the tensile strength at break of a non-cross-linked film (670 kg/cm²).

### Example 9:

In the preparation of a copolymer of 1,2,4,5,-tetraaminobenzene with aniline in a 1:9 mole ratio, 0.01 moles (2.84 g) of 1,2,4,5,-tetraaminobenzene tetrahydrochloride, 0.09 moles (11.66 g) of aniline hydrochloride, and 0.10 moles (22.82 g) of ammonium persulphate were used. The two amine salts were dissolved in 125 ml of water with stirring, the ammonium persulphate was made up to 60 ml with water and added in one go to the reaction solution, which quickly turned dark blue. After stirring for 20 hours, the reaction mixture was filtered and then washed with 3 x 100 ml of water. A small portion of the filter cake was kept for drying and a pressed powder pellet of 1.54 mm thickness showed a conductivity of 10.2 S/cm. The remainder of the filter cake was deprotonated by stirring in 100 ml of 35% ammonia solution before refiltering, washing with 2 x 100 ml of water and drying overnight under vacuum at 50°C.

## Claims

1. A cross-linked conjugated polymer containing carbon-nitrogen linkages wherein nitrogen atoms are covalently bound to a cross-linking group and on the average one cross-linking group is bound to more than one nitrogen atom.

2. The polymer of Claim 1 wherein the crosslinking group is aliphatic.

3. The polymer of Claim 1 or Claim 2 wherein the cross-linking group contains a radical of formula V 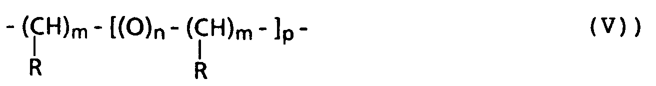 wherein R in each occurrence independently is H, CH₃ or OCH₃,
n in each occurrence independently is 0 or 1,
m in each occurrence independently is from 1 to 20
p is from 0 to 10 and
the total of all -CH-R groups is from 2 to 50.

4. The polymer of any one of Claims 1 to 3 wherein the weight of said cross-linking group is up to 10% by the total polymer weight.

5. The polymer of any one of Claims 1 to 4 wherein the conjugated polymer is polyaniline, a naphthyl or biphenyl derivative thereof, an alkyl, alkoxyl or aryl substituted polyaniline or a naphthyl or biphenyl derivative thereof.

6. A process for producing a cross-linked conjugated polymer of any one of Claims 1 to 5 wherein a conjugated polymer containing carbon-nitrogen linkages is reacted with a cross-linking agent containing at least two functional groups and being capable of covalently binding to the nitrogen of said polymer.

7. The process of Claim 6 wherein said functional groups are halogen, isocyanate groups, -C(O)-Cl groups, -O-C(O)-Cl groups or glycidyloxy groups.

8. The process of Claim 6 or Claim 7 wherein the produced cross-linked conjugated polymer is converted to a conductive form by doping.

9. A shaped article made from the cross-linked conjugated polymer of any one of Claims 1 to 5.

10. A process for producing a film or fibers from the cross-linked conjugated polymer of any one of Claims 1 to 5 wherein the film or the fibers are formed from a solution or dispersion of the cross-linked polymer in an organic diluent.

11. The process of Claim 10 wherein in the produced film or fibers are mono-oriented.

12. The process of Claim 11 wherein the mono-oriented film or fibers are doped.
